# EUROPÄISCHE PATENTSCHRIFT

(11) **EP 2 404 301 B1**
(45) Veröffentlichungstag und Bekanntmachung des Hinweises auf die Patenterteilung: **17.04.2013**
(21) Anmeldenummer: 10707499.9
(22) Anmeldetag: 01.03.2010
(51) Int. Cl.: H01B 13/08, H02K 15/10

(54) **VORRICHTUNG UND VERFAHREN ZUM ISOLIEREN VON LEITERSTÄBEN FÜR ROTIERENDE ELEKTRISCHE MASCHINEN**
APPARATUS AND METHOD FOR INSULATING CONDUCTOR BARS OF ROTATING ELECTRIC MACHINES
DISPOSITIF ET PROCÉDÉ D'ISOLATION POUR BARRES CONDUCTRICES POUR MACHINE ÉLECTRIQUE ROTATIVE

(30) Priorität: 02.03.2009 CH 305092009
(43) Veröffentlichungstag der Anmeldung: 11.01.2012
(73) Patentinhaber: Alstom Technology Ltd, 5400 Baden (CH)
(72) Erfinder: SAFARI ZADEH, Hossein, CH-5504 Othmarsingen (CH)
(86) Internationale Anmeldenummer: PCT/EP2010/052530
(87) Internationale Veröffentlichungsnummer: WO 2010/100105

(56) Entgegenhaltungen:
- DE-A1- 19 830 657
- DE-C- 577 646
- GB-A- 191 014 961
- US-A- 4 707 214

## Beschreibung

### Technisches Gebiet

Die Erfindung bezieht sich auf das Gebiet des Isolierens von elektrischen Leiterstäben, wie sie bei rotierenden Maschinen z.B. in Form von Statorspulen oder Röbelstäben Anwendung finden. Insbesondere betrifft die Erfindung eine Vorrichtung zum Umwickeln eines Leiterstabs mit einer Isolierung nach dem Oberbegriff des Anspruchs 1 sowie ein Verfahren zum Umwickeln eines Leiterstabs mit einer Isolierung nach dem Oberbegriff des Anspruchs 7.

### Stand der Technik

Es ist bekannt, Leiterstäbe mit einer Isolierung zu versehen, um einen Kurzschluss und/oder eine elektrische Entladung zu vermeiden. Eine bekannte Isolierung besteht aus einer Umwicklung mit einem glimmerhaltigen Isolierband beziehungsweise aus einem Glimmerband, welches mit einem Imprägnierfluid getränkt ist. Beim Umwickeln des Leiterstabs mit dem Isolierband wird das Isolierband von einer Vorratsrolle abgewickelt. Das Isolierband wird von der Vorratsrolle zum Leiterstab geführt. Mittels einer Drehbewegung des Leiterstabs relativ zur Vorratsrolle wird das Isolierband auf den Leiterstab aufgewickelt und mittels eines nachgeführten Andrückbandes angedrückt. Eine derartige Vorrichtung ist beispielsweise aus DE 19830657 bekannt.
Auch die ältere Druckschrift GB 14961 schlägt schon den Einsatz eines Andrückbands zum Andrücken des Isolierbands an den Leiterstab vor.
US 4707214 offenbart eine Vorrichtung zum Umwickeln eines Leiterstabs mit einem Isolierband, bestehend aus einer drehbaren ringförmigen, den Leiterstab umschließenden Trägereinrichtung zur Aufnahme zweier Vorratsrollen mit vorimprägniertem Isolierband. Indem die Trägereinrichtung mit den Vorratsrollen in einer Relativbewegung in Umfangs- und in axialer Richtung den Leiterstab umfährt, wird das Isolierband schraubenlinienförmig auf den Leiterstab aufgewickelt. Eine Anzahl in axialer Richtung zum Leiterstab verfahrbarer Andrückrollen verdichtet die aufgewickelte Isolierung auf den Schmal- und Breitseiten des Leiterstabs und vermindert Hohlraumbildung innerhalb der Isolierung.
Diese Umwicklungsverfahren führen aber zu einer ungleichmäßigen Banddicke, welche nachträglich ausgeglichen werden muss. Außerdem ist das Isolierband während des Auftragens stark belastet, um die Wickelkraft zu erhöhen und die Banddicke zu verringern. Die starke Belastung des Isolierbands erfordert eine Verstärkung des Bands, z.B. mit einem Glasfaser-Trägermaterial.

### Darstellung der Erfindung

Hier setzt die Erfindung an. Der vorliegenden Erfindung liegt die Aufgabe zugrunde, eine Vorrichtung zum Umwickeln eines Leiterstabs mit einem Isolierband sowie ein Verfahren zum Umwickeln eines Leiterstabs mit einem Isolierband bereitzustellen, welche ein verbessertes Aufbringen des Isolierbands auf den Leiterstab und eine zusätzliche Verdichtung desselben ermöglichen, um die Eigenschaften der Isolierung zu verbessern.

Erfindungsgemäß wird dieses Problem durch eine Vorrichtung zum Umwickeln eines Leiterstabs mit einem Isolierband mit den Merkmalen des Anspruchs 1 sowie ein Verfahren zum Umwickeln eines Leiterstabs mit einem Isolierband mit den Merkmalen des Anspruchs 7 gelöst. Vorteilhafte Weiterbildungen der erfindungsgemäßen Vorrichtung und des erfindungsgemäßen Verfahrens ergeben sich aus den abhängigen Ansprüchen.

Erfindungsgemäß weist eine Vorrichtung zum Umwickeln eines Leiterstabs mit einem Isolierband mindestens eine auf einer Trägereinrichtung angeordnete Vorratsrolle zur Bevorratung und Führung eines Isolierbands zu dem Leiterstab auf. Durch eine Drehbewegung der Leiterstabs relativ zu der Vorratsrolle und eine überlagerte axiale Relativbewegung umwickelt das Isolierband den Leiterstab. Erfindungsgemäß ist mindestens eine Druckrolle vorgesehen, mittels selbiger das Isolierband an den Leiterstab andrückbar ist. Dabei ist der von der Druckrolle auf die Oberfläche des Leiterstabs ausgeübte Druck mittels einer Verstelleinrichtung zeitlich variabel, insbesondere oszillierend einstellbar. Aufgrund des Einsatzes einer Druckrolle mit zeitlich variablem Anpressdruck kann das Isolierband während des Wickelvorgangs auf den Leiterstab kontrolliert verdichtet werden, was zu einer gleichmäßigen Banddicke und weniger Hohlräumen führt. Ein oszillierender Anpressdruck verbessert die Verdichtung zusätzlich. Da das Isolierband beim Aufbringen auf den Leiterstab mit der Druckrolle verdichtet wird, kann die Zugbelastung des Isolierbands während des Wickelvorgangs verringert werden. Daher können dünnere Isolierbänder verwendet werden als bislang möglich.

In einer Weiterbildung der Erfindung können mehrere Isolierbänder gleichzeitig zum Leiterstab geführt werden, wobei für jedes Isolierband eine separate Druckrolle vorgesehen ist. Dabei kann eine mehrlagige Isolierung auf den Leiterstab aufgebracht werden.

Ein Verfahren zum Umwickeln eines Leiterstabs mit einem Isolierband, wobei das Isolierband zum Leiterstab mittels einer Vorratsrolle geführt wird, die mit einem Träger verbunden ist, der sich relativ zum Leiterstab dreht, soll sich dadurch auszeichnen, dass das Isolierband gegen den Leiterstab mittels einer Druckrolle gedrückt wird, wobei der von der Druckrolle auf das Isolierband an dem Leiterstab ausgeübte Anpressdruck zeitlich variabel, insbesondere oszillierend, ist.

Weitere Vorteile und Ausgestaltungen der Erfindung ergeben sich aus der nachfolgenden Beschreibung und den beiliegenden Zeichnungen.

### Kurze Beschreibung der Zeichnungen

Die Erfindung ist anhand eines Ausführungsbeispiels in den Zeichnungen schematisch dargestellt und wird im Folgenden unter Bezugnahme auf die Zeichnungen ausführlich beschrieben.

Es zeigen, jeweils schematisch,
- Figur 1: eine Vorrichtung gemäß einer ersten bevorzugten Ausführungsform der Erfindung,
- Figur 2: eine Vorrichtung gemäß einer zweiten bevorzugten Ausführungsform der Erfindung,
- Figur 3: eine Vorrichtung gemäß einer dritten bevorzugten Ausführungsform der Erfindung.

### Wege zur Ausführung der Erfindung

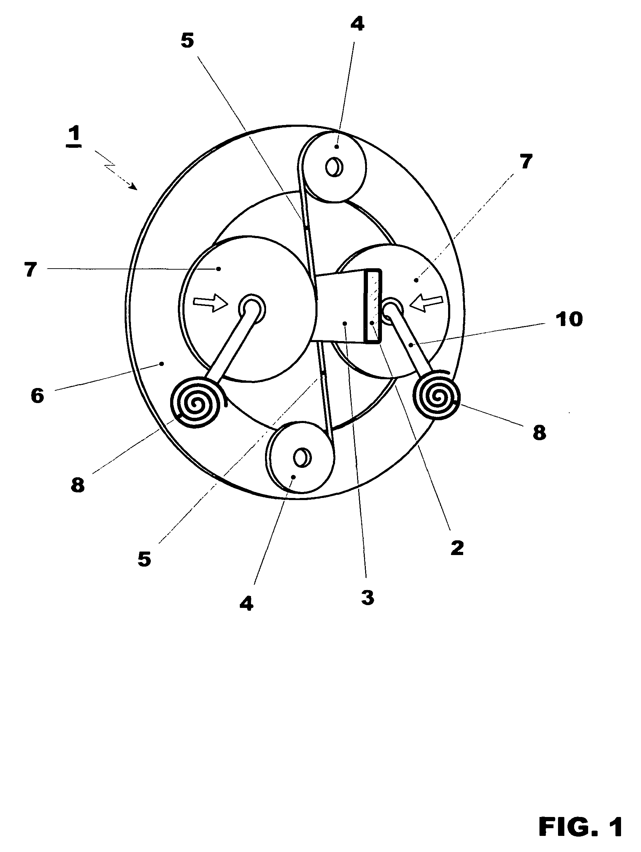

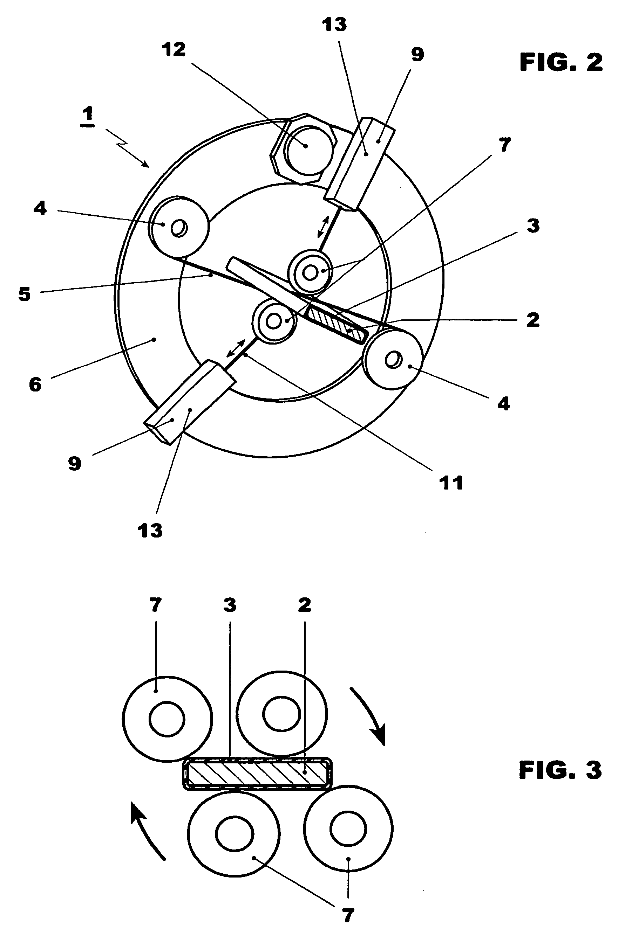

In Figur 1 ist eine Vorrichtung 1 zum Aufbringen einer Isolierung 3 auf einen Leiterstab 2 mittels Aufwickelns eines Isolierbands 5 gemäß einer ersten bevorzugten Ausführungsform der Erfindung dargestellt. Der Leiterstab 2 findet bei rotierenden Maschinen z.B. in Form von Stator- oder Röbelstäben Anwendung und kann aus einem Leiter oder einem Leiterbündel bestehen. Die Vorrichtung 1 verfügt über mindestens eine Vorratsrolle 4 zur Bevorratung und Führung eines Isolierbands 5 zum Leiterstab 2. Durch eine Drehbewegung des Leiterstabs 2 zu der Vorratsrolle 4 wird der Leiterstab 2 mit dem Isolierband 5 umwickelt. Hierzu kann die Vorratsrolle 4 mit einer um den Leiterstab 2 rotierenden Trägereinrichtung 6 verbunden sein. Alternativ kann auch die Position der Trägereinrichtung 6 fix sein und der Leiterstab 2 rotierend gelagert sein. Durch eine relative Axialbewegung zwischen dem Träger 6 und dem Leiterstab 2 kann das Isolierband 5 über die Länge des Leiterstabs 2 aufgetragen werden. Erfindungsgemäß ist mindestens eine Druckrolle 7 vorgesehen. Die Druckrolle 7 ist so angeordnet und ausgestaltet, dass sie das Isolierband 5 an den Leiterstab 2 andrückt. In vorteilhafter Ausgestaltung der Erfindung weist die Vorrichtung 1 zwei gegenüberliegende Druckrollen 7 auf, wie aus der Figuren 1 und 2 ersichtlich ist. Hierbei drücken die Druckrollen 7 je ein Isolierband 5 gegen den Leiterstab 2, um das Isolierband 5 zu verdichten. Es ist auch denkbar, ein einzelnes Isolierband 5 mit zwei gegenüberliegenden Druckrollen 7 gegen den Leiterstab 2 zu drücken. Die Druckrolle oder Druckrollen 7 sind mittels eines Schwenkarms 10 mit der Trägereinrichtung 6 verbunden, so dass sie senkrecht zur Oberfläche des Leiterstabs 2 beweglich sind. Um sowohl die notwendige Schwenkfreiheit wie auch eine entsprechende Anpresskraft der Druckrolle 7 zu gewährleisten, ist eine Verstelleinrichtung 8, 9 an der Trägereinrichtung 6 vorgesehen. In der Ausführungsart gemäss Figur 1 wird die Verstelleinrichtung 8 elektrisch betätigt. Die Druckrolle 7 ist an dem entgegengesetzten Ende des Arms 10 angeordnet, wobei der Arm 10 mit der Trägereinrichtung 6 mittels der elektrischen Verstelleinrichtung 8 schwenkbar verbunden ist. Die Schwenkbewegung des Arms 10 ermöglicht eine Bewegung der Druckrolle 7 senkrecht zur Oberfläche des Leiterstabs 2. In der Figur 2 ist eine pneumatische Verstelleinrichtung 9 zur Führung der Druckrolle 7 entlang der Oberfläche des Leiterstabs 2 vorgesehen. Die Verstelleinrichtung 9 gemäss Figur 2 umfasst einen Pneumatikzylinder 13 mit einer Kolbenstange 11, an deren äußerem Ende die Druckrolle 7 angeordnet ist. Die Verstelleinrichtung 9 ist wiederum mit der Trägereinrichtung 6 verbunden. Bei einer relativen Drehbewegung der Druckrolle 7 um den Leiterstab 2 bewegt sich die Druckrolle 7 mittels der Verstelleinrichtung 9 in radialer Richtung relativ zur Längsachse des Leiterstabs 2. Eine Luftpumpe 12 und ein Kompensator für die Verstelleinrichtung 9 können ebenfalls an der Trägereinrichtung 6 vorgesehen sein.

Der Anpressdruck der Druckrolle 7 auf die Isolierung 3 des Leiterstabs 2 ist mittels der Verstelleinrichtung 8, 9 einstellbar. Somit kann das Isolierband 5 nicht nur mit einem konstanten Anpressdruck, sondern auch den Erfordernissen entsprechend während des Wickelvorgangs mehr oder weniger stark angedrückt werden. Die Verstelleinrichtung 8, 9 ist mit Mitteln für eine oszillierende Variation des Anpressdrucks ausgerüstet. Die Frequenz der aufgebrachten Schwingungen liegt dabei vorteilhaft in einem Bereich zwischen 5 Hz und 50 Hz, besonders bevorzugt in einem Bereich von 5 Hz bis 10 Hz.

Die Druckrolle 7 kann vollständig oder teilweise aus einem elastischen Material, beispielsweise Weichgummi hergestellt sein. Der Außenumfang kann als Luftreifen ausgebildet sein. Die Härte des Gummis oder der Luftdruck des Reifens werden entsprechend dem geforderten Anpressdruck ausgewählt.

In den Figuren 1 und 2 sind Ausführungsarten mit jeweils zwei Vorratsrollen 4 und zwei Druckrollen 7 dargestellt. Es ist aber auch möglich, dass die Vorrichtung 1 mit mehr oder weniger Druckrollen 7 ausgestattet ist. Vier Druckrollen 7, wie es in Figur 3 dargestellt ist, ermöglichen die gleichzeitige Umwicklung des Leiterstabs 2 mit vier Isolierbändern 5, um den Isolierprozess zu beschleunigen.

Durch den Einsatz mindestens einer Druckrolle 7 kann das Isolierband 5 gleich beim Aufbringen auf den Leiterstab 2 verdichtet werden, was zu einer gleichmäßigen Banddicke und wenigen Hohlräumen führt. Da das Isolierband 5 beim Aufbringen auf den Leiterstab 2 mit der Druckrolle 7 verdichtet wird, kann die Zugbelastung des Isolierbands 5 während des Wickelvorgangs verringert werden. Dies erlaubt den Einsatz dünner Isolierbänder 5. Daraus ergibt sich die Möglichkeit, ein Isolierband 5 ohne oder nur mit einem geringen Glasfaseranteil oder mit sehr dünnen Glasfasern als Trägermaterial zu verwenden. Da ein mit der erfindungsgemäßen Vorrichtung aufgetragenes Isolierband 5 verdichtet wird, verfügt es nach einer Imprägnierung über einen geringen Harzinhalt, was zu einer höheren Spannungsfestigkeit und geringeren Verlusten führt.

### Bezugszeichenliste

1. Vorrichtung
2. Leiterstab
3. Isolierung
4. Vorratsroller
5. Isolierband
6. Trägereinrichtung
7. Druckrolle
8. Verstelleinrichtung
9. Verstelleinrichtung
10. Arm
11. Stange
12. Luftpumpe
13. Pneumatikzylinder

## Patentansprüche

1. Vorrichtung (1) zum Umwickeln eines Leiterstabs (2) mit einer Isolierung (3), wenigstens umfassend eine Trägereinrichtung (6) mit mindestens einer Vorratsrolle (4) zur Bevorratung und Führung eines Isolierbands (5) zu dem Leiterstab (2), wobei der Leiterstab (2) eine Drehbewegung und eine Axialbewegung relativ zu der Trägereinrichtung (6) ausführt, um den Leiterstab (2) mit dem Isolierband (5) zu umwickeln, die Trägereinrichtung (6) den Leiterstab (2) ringförmig umschließt, relativ zu jenem drehbar ist und mit mindestens einer Druckrolle (7), welche das Isolierband (5) an den Leiterstab (2) andrückt, verbunden ist, **dadurch gekennzeichnet, dass** die mindestens eine Druckrolle (7) an einem Arm (10, 11) befestigt ist, welcher mittels einer Verstelleinrichtung (8, 9) beweglich mit der Trägereinrichtung (6) verbunden ist, und ein von der Druckrolle (7) auf den Leiterstab (2) ausgeübter Anpressdruck mittels der Verstelleinrichtung (8, 9) einstellbar ist, und
dass die Verstelleinrichtung (8, 9) Mittel für eine zeitlich variable Aufbringung des Anpressdrucks umfasst.

2. Vorrichtung nach Anspruch 1,
**dadurch gekennzeichnet,**
**dass** die Verstelleinrichtung (8, 9) Mittel für eine oszillierende Aufbringung des Anpressdrucks umfasst.

3. Vorrichtung nach Anspruch 1 oder 2,
**dadurch gekennzeichnet,**
**dass** die mindestens eine Verstelleinrichtung (8, 9) an dem Träger (6) elektrisch oder pneumatisch betrieben ist.

4. Vorrichtung nach einem der vorhergehenden Ansprüche,
**dadurch gekennzeichnet,**
**dass** die Druckrolle (7) vollständig oder teilweise aus Gummi hergestellt ist oder an ihrem Außenumfang einen fluidgefüllten Reifen besitzt.

5. Vorrichtung nach einem der vorhergehenden Ansprüche,
**dadurch gekennzeichnet,**
**dass** zwei oder vier Vorratsrollen (4) vorgesehen sind, die jeweils ein Isolierband (5) bevorraten und zum Leiterstab (2) führen, wobei für jedes Isolierband (5) eine andrückende Druckrolle (7) vorgesehen ist.

6. Vorrichtung nach einem der vorhergehenden Ansprüche,
**dadurch gekennzeichnet,**
**dass** das Isolierband (5) frei von Verstärkungsfasern ist.

7. Verfahren zum Umwickeln eines Leiterstabs (2) mit einer Isolierung (3), wobei ein Isolierband (5) von einer Vorratsrolle (4) zu dem Leiterstab (2) geführt wird, wobei Vorratsrolle (4) und Leiterstab (2) eine Relativbewegung zueinander ausführen, das Isolierband (5) mittels einer Druckrolle (7) gegen den Leiterstab (2) angedrückt wird, und die Position der Druckrolle (7) relativ zu der Trägereinrichtung (6) verstellbar ist,
**dadurch gekennzeichnet,**
**dass** der von der Druckrolle (7) auf das Isolierband (5) an dem Leiterstab (2) ausgeübte Anpressdruck zeitlich variabel ist.

8. Verfahren nach Anspruch 7,
**dadurch gekennzeichnet,**
**dass** der von der Druckrolle (7) auf das Isolierband (5) an dem Leiterstab (2) ausgeübte Anpressdruck oszillierend ist.

9. Verfahren nach Anspruch 8,
**dadurch gekennzeichnet,**
**dass** die Frequenz des oszillierenden Anpressdrucks im Bereich von 5 Hz bis 50 Hz, vorzugsweise im Bereich von 5 Hz bis 10 Hz liegt.

## Claims

1. An apparatus (1) for wrapping a conductor bar (2) with insulation (3), comprising at least a support device (6) having at least one supply roll (4) for holding and feeding an insulating tape (5) to the conductor bar (2), with the conductor bar (2) carrying out a rotary movement and an axial movement relative to the support device (6), in order to wrap the conductor bar (2) with the insulating tape (5), the support device (6) surrounding the conductor bar (2) in the form of a ring, being able to rotate relative to it and being connected to at least one pressure roll (7), which presses the insulating tape (5) onto the conductor bar (2),
**characterized**
**in that** the at least one pressure roll (7) is attached to an arm (10, 11) which is connected to the support device (6), such that it can move, by means of an adjustment device (8, 9) and a contact pressure exerted by the pressure roll (7) on the conductor bar (2) can be adjusted by means of the adjustment device (8, 9), and
**in that** the adjustment device (8, 9) has means for application, which varies over time, of the contact pressure.

2. The apparatus as claimed in claim 1,
**characterized**
**in that** the adjustment device (8, 9) has means for oscillating application of the contact pressure.

3. The apparatus as claimed in claim 1 or 2,
**characterized**
**in that** the at least one adjustment device (8, 9) on the support (6) is driven electrically or pneumatically.

4. The apparatus as claimed in one of the preceding claims,
**characterized**
**in that** the pressure roll (7) is produced completely or partially from rubber, or has a fluid-filled tire on its external circumference.

5. The apparatus as claimed in one of the preceding claims,
**characterized**
**in that** two or four supply rolls (4) are provided, which each hold an insulating tape (5) and feed it to the conductor bar (2), with a contacting pressure roll (7) being provided for each insulating tape (5).

6. The apparatus as claimed in one of the preceding claims,
**characterized**
**in that** the insulating tape (5) is free of reinforcing fibers.

7. A method for wrapping a conductor bar (2) with an insulating tape (3), with the insulating tape (5) being fed from a supply roll (4) to the conductor bar (2), with the supply roll (4) and the conductor bar (2) carrying out a relative movement with respect to one another, the insulating tape (5) being pressed against the conductor bar (2) by means of a pressure roll (7), and the position of the pressure roll (7) relative to the support device (6) being adjustable,
**characterized**
**in that** the contact pressure exerted by the pressure roll (7) on the insulating tape (5) on the conductor bar (2) can be varied over time.

8. The method as claimed in claim 7,
**characterized**
**in that** the contact pressure which is exerted by the pressure roll (7) on the insulating tape (5) on the conductor bar (2) oscillates.

9. The method as claimed in claim 8,
**characterized**
**in that** the frequency of the oscillating contact pressure is in the range from 5 Hz to 50 Hz, preferably in the range from 5 Hz to 10 Hz.

## Revendications

1. Dispositif (1) d'enveloppement d'une barre conductrice (2) avec un isolant (3), comprenant au moins un dispositif de support (6) pourvu d'au moins un rouleau de réserve (4) servant à stocker une bande isolante (5) et à la guider par rapport à la barre conductrice (2), la barre conductrice (2) effectuant un mouvement de rotation et un mouvement axial par rapport au dispositif de support (6), pour envelopper la barre conductrice (2) avec la bande isolante (5), le dispositif de support (6) entourant la barre conductrice (2) en suivant une forme d'anneau, pouvant être pivoté par rapport à elle et étant relié à au moins un rouleau compresseur (7) comprimant la bande isolante (5) contre la barre conductrice (2), **caractérisé en ce que** l'au moins un rouleau compresseur (7) est fixé à un bras (10, 11) relié de façon mobile au dispositif de support (6) par le biais d'un dispositif de réglage (8, 9) et qu'une pression de compression exercée par le rouleau compresseur (7) sur la barre conductrice (2) peut être réglée à l'aide du dispositif de réglage (8, 9) et que le dispositif de réglage (8, 9) comprend des moyens d'application variable dans le temps de la pression de compression.

2. Dispositif selon la revendication 1, **caractérisé en ce que** le dispositif de réglage (8, 9) comprend des moyens d'application oscillante de la pression de compression.

3. Dispositif selon la revendication 1 ou 2, **caractérisé en ce que** l'au moins un dispositif de réglage (8, 9) est entraîné de façon électrique ou pneumatique au niveau du support (6).

4. Dispositif selon l'une quelconque des revendications précédentes, **caractérisé en ce que** le rouleau compresseur (7) est entièrement ou en partie fabriqué en caoutchouc ou possède au niveau de sa circonférence extérieure un pneumatique rempli de fluide.

5. Dispositif selon l'une quelconque des revendications précédentes, **caractérisé en ce que** l'on prévoit deux ou quatre rouleaux de réserve (4) stockant respectivement une bande isolante (5) et la guidant vers la barre conductrice (2), un rouleau compresseur (7) en appui étant prévu pour chaque bande isolante (5).

6. Dispositif selon l'une quelconque des revendications précédentes, **caractérisé en ce que** la bande isolante (5) est exempte de fibres de renfort.

7. Procédé d'enveloppement d'une barre conductrice (2) avec un isolant (3), une bande isolante (5) étant guidée par un rouleau de réserve (4) par rapport à la barre conductrice (2), le rouleau de réserve (4) et la barre conductrice (2) effectuant un mouvement relatif l'un par rapport à l'autre, la bande isolante (5) étant comprimée contre la barre conductrice (2) à l'aide d'un rouleau compresseur (7) et la position du rouleau compresseur (7) par rapport au dispositif de support (6) étant réglable, **caractérisé en ce que** la pression de compression exercée par le rouleau compresseur (7) sur la bande isolante (5) au niveau de la barre conductrice (2) est variable dans le temps.

8. Procédé selon la revendication 7, **caractérisé en ce que** la pression de compression exercée par le rouleau compresseur (7) sur la bande isolante (5) au niveau de la barre conductrice (2) est oscillante.

9. Procédé selon la revendication 8, **caractérisé en ce que** la fréquence de la pression de compression oscillante se situe dans la plage de 5 Hz à 50 Hz, de préférence dans la plage de 5 Hz à 10 Hz.
